# EUROPÄISCHE PATENTANMELDUNG

(11) **EP 3 705 661 A1**
(43) Veröffentlichungstag der Anmeldung: **09.09.2020**
(21) Anmeldenummer: 19160866.0
(22) Anmeldetag: 05.03.2019
(51) Int. Cl.: E04G 11/06, E04G 17/14, G01S 5/02, G01S 5/14, G06Q 50/08, E04B 1/35

(54) **VERFAHREN UND SYSTEM ZUR POSITIONSBESTIMMUNG EINER SCHALUNG**

(71) Anmelder: Umdasch Group NewCon GmbH, 3300 Amstetten (AT)
(72) Erfinder: Die Erfindernennung liegt noch nicht vor
(74) Vertreter: Sonn & Partner Patentanwälte

(57) **Zusammenfassung**

Verfahren und System (1) zur Positionsbestimmung einer angedockten Schalung (25), umfassend:
Aussenden eines Ortungssignals von der angedockten Schalung (25) ;
Empfangen des ausgesendeten Ortungssignals mit einem Empfänger (5) an mindestens einem Bezugspunkt (3);
Ermitteln eines Abstands (26) zwischen der angedockten Schalung (25) und dem mindestens einen Bezugspunkt (3) auf Basis des empfangenen Ortungssignals;
Ermitteln einer mit dem ermittelten Abstand (26) vereinbaren Andockposition (28) der angedockten Schalung (25) an mindestens eine bestehende Schalung (20); und
Speichern der ermittelten Andockposition (28) als Position der angedockten Schalung (25).

## Beschreibung

Die Erfindung betrifft ein Verfahren und ein System zur Positionsbestimmung einer an mindestens einer bestehenden Schalung angedockten Schalung.

Als Schalung wird in diesem Zusammenhang ein einzelnes, üblicherweise auf mindestens einer Seite flaches Element zur Herstellung einer Hohlform zum Gießen von Betonteilen bezeichnet. Ein solches Element umfasst in der Regel eine Schalungsplatte oder Schaltafel und kann optional einen Rahmen aufweisen. Die Schalungsplatte ist regelmäßig aus Holz, beispielsweise Sperrholz oder Vollholz, hergestellt und kann optional beschichtet oder versiegelt sein. Die Erfindung ist dabei auf jede Art von Schalung anwendbar, z.B. Wandschalungen und/oder Deckenschalungen und/oder Kletterschalungen.

Solche Schalungen werden in der Regel mehrmals wiederverwendet, häufig auch auf derselben Baustelle. Außerdem kommen je nach Anforderungen der zu gießenden Betonteile Schalungen unterschiedlicher Größe und Stärke zum Einsatz.

Um die vorhandenen Schalungen optimal zu nutzen, ist es wichtig, zu verfolgen, welche Schalung wann und wo eingesetzt wird. Auf Basis dieser Informationen und/oder einer vorgegebenen Schalzeit, beziehungsweise eines definierten Bauprozesses, kann ein Entschalzeitpunkt für jede Schalung individuell ermittelt werden. Somit steht die Information zur Verfügung, welche Schalung mit welchen Abmessungen wo und wann zur Wiederverwendung frei wird. Dies erlaubt einen Überblick über die vorhandenen Schalungen und eine Optimierung der insgesamt notwendigen Schalungen (d. h. der Anzahl) sowie der Transportwege der einzelnen Schalungen. Darüber hinaus ist es auch günstig, die Positionen der Schalungen während einer Zwischenlagerung zu verfolgen. Daraus können Rückschlüsse für die Abfallwirtschaft, Logistik und/oder Baustelloperationen gezogen werden und es lässt sich ermitteln, wo gerade Platz zum Aufstellen einer Schalung ist.

Für die Positionsbestimmung oder Ortung der Schalung ist eine Genauigkeit erforderlich, die beispielsweise mit UWB-Technologie (Ultrabreitband) erzielt werden kann. Dabei werden Signale mit einer Bandbreite von mindestens 500 MHz verwendet und es kann eine relativ niedrige Sendeleistung eingesetzt werden, um bereits belegte Frequenzbereiche nicht zu stören (z.B. 0,5 mW / -41,3 dBm/MHz). Diese Frequenzbereiche erlauben zentimetergenaue Indoor-Lokalisierungen und integrierte Datenkommunikation. Bei dieser Technologie sind an mehreren Bezugspunkten (oder Referenzpunkten) um einen gewünschten Bereich Empfänger (oder "Anker") für Ortungssignale positioniert. Die Empfänger empfangen Ortungssignale von Sendern (z.B. "Tags", "Sensoren" oder "Sendern") und leiten die Empfangsinformation (z.B. Zeitstempel, Signalstärke, Dateninhalt) an eine Zentrale (oder "Server") weiter. Diese Weiterleitung kann in Echtzeit ("real-time", RT) oder nahe Echtzeit ("near real-time", NRT) erfolgen. In diesem Fall spricht man von einem Echtzeit-Ortungssystem ("Real-time locating system", RTLS). Die Positionsbestimmung basiert dabei auf der Ermittlung der Abstände des Senders zu mehreren Empfängern; im Einzelnen wird dabei die Laufzeit zwischen dem Sender und mindestens drei Empfängern ermittelt und auf Basis dieser von den Empfängern bereitgestellten Information zusammen mit den bekannten Positionen der Empfänger mittels Trilateration die Position des Senders ermittelt. Die Sender können beispielsweise batteriebetrieben sein. Sie senden im Wesentlichen mindestens eine Identifikation (ID) und einen Zeitstempel ("timestamp") an die Empfänger. Eine beispielhafte Anwendung dieser Ortungstechnologie für die dynamische Positionsbestimmung von Personen, z.B. auf einem Spielfeld, ist in WO 2013/167702 A1 beschrieben.

Für die Anwendung der Positionsbestimmung von Schalungen auf einer Baustelle hat die oben erläuterte Technologie jedoch den Nachteil, dass eine Sichtverbindung ("Line of sight", LoS) zwischen dem Sender und mindestens drei Empfängern erforderlich ist. Als Sichtverbindung kann nicht nur eine direkte optische Sichtverbindung zwischen Empfänger und Sender verstanden werden, sondern auch eine unterbrechungsfreie oder -arme Übertragung von elektromagnetischen Signalen, Daten, usw. Aufgrund der im Wesentlichen plattenförmigen Geometrie von Schalungen und deren gegenüberliegender/gespiegelter Anordnung bei der Verwendung kommt es bei gleichzeitiger Verwendung mehrerer Schalungen (z.B. mehr als zehn) fast unweigerlich zu Unterbrechungen dieser Sichtverbindungen und Signalstörungen, insbesondere wenn die Empfänger außerhalb der Baustelle (zum Beispiel am Rand oder oberhalb) angeordnet sein sollen. Dieses Problem könnte grundsätzlich dadurch gelöst werden, dass in jedem zu errichtendem Raum drei Empfänger angeordnet werden. Der damit verbundene Aufwand (Ausrüstungskosten und Einrichtungsaufwand) macht diese Lösung jedoch unpraktikabel.

Es ist eine Aufgabe der Erfindung, zumindest einzelne Nachteile des Standes der Technik zu beseitigen oder zumindest zu verringern.

Die Erfindung sieht ein Verfahren der eingangs angeführten Art vor, umfassend:
Aussenden eines Ortungssignals von der angedockten Schalung (d.h. von einem Tag oder Sender dieser Schalung);
Empfangen des ausgesendeten Ortungssignals mit einem Empfänger an mindestens einem Bezugspunkt;
Ermitteln eines Abstands zwischen der angedockten Schalung und dem mindestens einen Bezugspunkt auf Basis des empfangenen Ortungssignals;
Ermitteln einer mit dem ermittelten Abstand vereinbaren Andockposition der angedockten Schalung an der mindestens einen bestehenden Schalung (wobei die Position/en der mindestens einen bestehenden Schalung bekannt ist/sind); und
Speichern der ermittelten Andockposition als Position der angedockten Schalung.

Außerdem sieht die Erfindung ein System der eingangs angeführten Art vor, umfassend:
eine angedockte Schalung mit einem Sender für ein Ortungssignal,
mindestens einen Bezugspunkt mit einem Empfänger für ein Ortungssignal,
eine Abstandermittlungseinheit, die zur Ermittlung eines Abstands zwischen der angedockten Schalung und dem mindestens einen Bezugspunkt auf Basis eines vom Sender gesendeten und vom Empfänger empfangenen Ortungssignals eingerichtet ist;
eine Positionsdatenbank mit gespeicherten Positionen mindestens einer bestehenden Schalung; und
eine Abgleicheinheit, die zur Ermittlung einer mit einem von der Abstandermittlungseinheit ermittelten Abstand vereinbaren Andockposition der angedockten Schalung an einer bestehenden Schalung und zum Speichern der ermittelten Andockpositionen in der Positionsdatenbank als Position der angedockten Schalung eingerichtet ist.

Beim Ermitteln des Abstandes zwischen der angedockten Schalung und dem Bezugspunkt wird im Einzelnen der Abstand zwischen dem Sender oder Tag an der Schalung und einem oder mehreren Empfängern oder Ankern ermittelt. Diese Ermittlung basiert naturgemäß nicht ausschließlich auf dem empfangenen Ortungssignal, sondern berücksichtigt beispielsweise auch die Position des Empfängers und den Empfangszeitpunkt des Ortungssignals. Je nach den Gegebenheiten können eine oder mehrere oder alle Andockpositionen der angedockten Schalung an der mindestens einen bestehenden Schalung ermittelt werden. Die Ermittlung einer Andockposition erfordert Kenntnis von der Geometrie der beiden Schalungen. Im einfachsten Fall kann eine einheitliche, vorgegebene Geometrie aller Schalungen angenommen werden. Wenn genau eine vereinbare Andockposition ermittelt wurde, wird diese Andockposition als Position der angedockten Schalung gespeichert. Andernfalls kann eine Auswahl aufgrund einer Reihung der Andockpositionen, beispielsweise auf Basis einer zugeordneten Ungenauigkeit oder einer zugeordneten Wahrscheinlichkeit, erfolgen.

Das Ermitteln der Andockposition kann beispielsweise umfassen:
Ermitteln aller möglichen Andockpositionen der angedockten Schalung an der mindestens einen bestehenden Schalung;
Ermitteln des jeweils zugeordneten Abstandes der ermittelten möglichen Andockpositionen zu dem mindestens einen Bezugspunkt;
Ermitteln jener Andockpositionen als vereinbar mit dem ermittelten Abstand, deren zugeordneter Abstand innerhalb eines Toleranzbereichs um den ermittelten Abstand liegt. Als Toleranzbereich kann insbesondere ein Abstandsbereich verwendet werden, dessen Breite im Wesentlichen der Ungenauigkeit der Ortung entspricht, z.B. mit einer Breite zwischen 5 cm und 30 cm oder von etwa 10 cm oder von etwa 20 cm.

Alternativ zur Ermittlung aller Andockpositionen der angedockten Schalung an der mindestens einen bestehenden Schalung ist auch denkbar, dass nur die Andockpositionen innerhalb des Toleranzbereichs des ermittelten Abstands ermittelt werden. Insbesondere bei einer sehr großen Anzahl von bestehenden Schalungen können Verfahren mit dieser Vorgangsweise vereinfacht und beschleunigt werden.

Darüber hinaus kann das Ermitteln der Andockposition umfassen: Beschränken der möglichen Andockpositionen auf Grundlage einer örtlichen Bereichsbegrenzung. Die örtliche Bereichsbegrenzung bildet dabei eine Randbedingung für mögliche Andockpositionen. D. h. es kommen nur solche Andockpositionen infrage, bei denen die Schalung innerhalb des örtlich begrenzten Bereichs positioniert ist. Als solche Bereichsbegrenzung kann beispielsweise die Baustellengröße und -position oder allgemein die Grenze oder Abmessungen der Baustelle verwendet werden. In diesem Beispiel kämen nur solche Andockpositionen infrage, bei denen die Schalung auf der Baustelle bleibt.

In diesem Zusammenhang kann das Ermitteln der Andockposition weiters umfassen: Beschränken der möglichen Andockpositionen auf Grundlage einer Lageinformation betreffend die angedockte Schalung. Die Lageinformation kann beispielsweise mit einem Magnetometer oder einem Kompass gewonnen werden, die jeweils an der angedockten Schalung fixiert sein können. Wenn eine Lageinformation vorliegt, können grundsätzlich (d. h. nach einem der oben genannten Verfahren ermittelte) mögliche Andockpositionen, bei denen die hypothetische Lage der Schalung von der ermittelten tatsächlichen Lage auf Basis der Lageinformation abweicht, verworfen werden. Dabei kann ein Grenzwert oder Toleranzbereich verwendet werden, welche sich an der Ungenauigkeit der Lageinformation orientiert, beispielsweise ein Toleranzbereich von 10° für die horizontale Ausrichtung und ein Toleranzbereich von 20° für die vertikale Ausrichtung.

Die angedockte Schalung im vorliegenden System kann optional einen Lagesensor aufweisen, wobei der Lagesensor mit dem Sender für das Ortungssignal verbunden ist. Dadurch kann die Lageinformation vom Lagesensor ausgelesen und über den Sender an den Empfänger übermittelt werden. Am Empfänger liegen dann genügend Informationen vor, um sowohl die Lage als auch - möglicherweise abhängig von der Lage - die Position der angedockten Schalung zu ermitteln.

Der Sender oder Tag der angedockten Schalung kann in einer weiteren Ausführungsform auch ein 3D-Gyrometer (3D-Gyroskop), 3D-Magnetometer und/oder ein 3D-Accelerometer (Beschleunigungssensor), aufweisen. Schalungen werden im Wesentlichen mit bestimmten Breiten und Höhen geliefert. Beispiele für derartige Breiten sind, 30 cm, 45 cm, 60 cm, 90 cm und 135 cm. Beispiele für derartige Höhen sind 135 cm, 270 cm und 330 cm. Auf einer Baustelle kann es durchaus vorkommen, dass zwei oder mehrere Schalungen dazu verwendet werden, um eine andere Schalungshöhe oder -breite abzubilden. Beispielsweise könnte 45 cm breite und eine 90 cm breite Schalung zusammengestellt werden, um eine 135 cm breite Schalung zu stellen. Um dieses System für die erfindungsgemäße Anwendung nutzbar zu machen, kann nicht nur die zweidimensionale Lage (Magnetometer, Teslameter), sondern auch die Lage im dreidimensionalen Raum bestimmt werden. Sollte nun eine Schalung gedreht werden, um die Breite als Höhe und die Höhe als Breite abzubilden, so kann die dreidimensionale Lage erkannt werden, um die Andockpositionen genauer bestimmen zu können.

Eine derartige Lageerkennung im dreidimensionalen Raum bietet zusätzlich den positiven Effekt, dass auch eine flächig horizontal oder auf einem Stapel liegende Schalung erkannt werden kann. Flächig horizontal liegende Schalungen sind grundsätzlich gleichzusetzen mit ruhenden, also inaktiven Schalungen. Sobald eine Ruheposition erkannt wird, kann also errechnet und mit dem digitalen Modell abgeglichen werden, ob die Schalung noch Verwendung findet oder abtransportiert werden kann. Sollte also eine flächig horizontal liegende Schalung erkannt werden, so kann diese im digitalen System auf inaktiv gesetzt werden. Die Position der inaktiven Schalung wird ebenso über die Geometriedaten der Schalung bestimmt. Da die genaue Positionsbestimmung bei flächig horizontal liegenden Schalungen nicht primär wichtig ist und flächig horizontal liegende Schalungen visuell leicht erkennbar sind, genügt eine ungefähre Positionsbestimmung, insbesondere da flächig horizontal liegende Schalungen aufgrund ihrer niederen Lage oft keinen Sichtkontakt (Line of Sight; LoS) zu den Empfängern aufweisen, sodass ab jenem Zeitpunkt, an dem der Kontakt zu keinem Empfänger vorhanden ist, eine hohe Wahrscheinlichkeit an die Schalung vergeben werden kann, dass diese sich in einer Ruheposition befindet. Bei angelieferten Gebinden (z.B. aufeinander gestapelte Schalungen) kann die oberste Schalung in Ruheposition erfasst werden. Die flächig horizontal darunterliegenden Schalungen können nur schwer oder gar nicht erkannt werden, da die Line of Sight durch die flächig horizontal darüber liegende Schalung unterbrochen ist. Die erste Schalung muss daher erst abgehoben wurde, bevor die flächig horizontal darunterliegende Schalung erfasst werden kann. Denkbar wäre auch ein Vermerk auf dem Sender oder Tag der flächig horizontal oben aufliegenden Schalung, welche Schalungen sich darunter befinden. Außerdem wäre auch denkbar, an der Palette oder dem Gebinde selbst einen Tag oder Sender anzubringen, auf welchem Informationen zu den Schalungen gespeichert sind. Diese Daten können bei Anlieferung und ab Sichtkontakt zu wenigstens einem Empfänger verarbeitet werden. Beim Abstapeln der Schalungen können die Schalungen, die in eine Ruheposition gebracht werden, zeitlich erkannt werden. Somit kann eine wahrscheinliche Abstapelreihenfolge erkannt und im digitalen System hinterlegt werden.

Gemäß einem Ausführungsbeispiel des offenbarten Verfahrens kann ein Ortungssignal zusammen mit einer Geometrie der angedockten Schalung und/oder mit einer Lageinformation von der angedockten Schalung an einen Empfänger übermittelt werden. Dabei kann eine Definition der Geometrie der Schalung im Ortungssignal enthalten sein oder ein Verweis auf eine aus mehreren möglichen vorgegebenen Geometriedefinitionen oder eine Identifikation der Schalung, aus der sich auf die Geometrie schließen lässt und die beispielsweise mit einer Geometriedefinition verknüpft ist.

Dementsprechend kann bei dem offenbarten System die Abgleicheinheit mit einer Geometriedatenbank mit gespeicherten Schalungsgeometrien der angedockten und der mindestens einen bestehenden Schalung verbunden sein. Die Verwendung einer solchen Geometriedatenbank ist dann zweckmäßig, wenn mehrere verschiedene Geometrien zum Einsatz kommen.

Wenn keine Lageinformation vorliegt oder um die Übertragung von Fehlern bei der Lageermittlung auf die Positionsermittlung zu vermeiden, kann bei dem hier offenbarten System der Sender zentriert auf der angedockten Schalung angeordnet sein. D. h. der Sender für das Ortungssignal ist im Wesentlichen in der Mitte einer Rückseite (d.h. beim Ausgießen vom Beton oder anderen Baumaterial abgewandten Seite) der Schalung angeordnet und in der Ebene dieser Seitenfläche zumindest horizontal zentriert.

Davon abgesehen betrifft die Erfindung auch allgemein ein Verfahren zur Positionsbestimmung einer angedockten Schalung, umfassend:
Ermitteln der Anzahl von Bezugspunkten mit einer direkten Sichtverbindung (d.h. einer störungsfreien oder -armen Signalverbindung, siehe oben) zu der angedockten Schalung;
wenn die ermittelte Anzahl von Bezugspunkten kleiner als drei oder kleiner als zwei ist, Durchführen des Verfahrens nach eine der oben beschriebenen Varianten.
Die bedingte Anwendung des oben geschilderten Verfahrens ermöglicht eine Differenzierung und Kombination mit anderen, möglichweise genaueren Ortungsverfahren. Sofern solche zur Verfügung stehen, kann auf eine rechnerisch potenziell vergleichsweise aufwändigere und/oder ungenauere Ermittlung nach den hier dargestellten Verfahren verzichtet werden.

Wenn die ermittelte Anzahl von Bezugspunkten mindestens drei ist, kann die Position der angedockten Schalung auf Basis der Abstände zu den mindestens drei Bezugspunkten ermittelt werden und einer Wahrscheinlichkeit von eins zugeordnet werden. Sobald mindestens drei Bezugspunkte eine Sichtverbindung im Sinne einer störungsfreien oder -armen Signalverbindung zur angedockten Schalung haben, kann die Position dieser Schalung geometrisch eindeutig bestimmt werden, unabhängig von der Position anderer Schalungen. Einer auf diese Weise ermittelten Position kann eine Wahrscheinlichkeit von eins zugeordnet werden, um auszudrücken, dass für die Bestimmung der Position keine Annahmen über die Identität, Geometrie und/oder Lage der Schalung erforderlich waren.

Der nach einem der weiter oben beschriebenen Verfahren ermittelte Position der angedockten Schalung (d. h. auf Basis möglicher Andockpositionen) kann in diesem Zusammenhang eine reduzierte Wahrscheinlichkeit kleiner als eins zugeordnet werden, wobei die der mindestens einen bestehenden Schalung, an die die angedockte Schalung angedockt ist, zugeordnete Wahrscheinlichkeit berücksichtigt wird. Dadurch kann die Unsicherheit der auf Basis mehrerer Annahmen ermittelten Position in einem quantitativen Parameter ausgedrückt werden. Grundsätzlich sinkt die Wahrscheinlichkeit mit der Anzahl der getroffenen Annahmen. Z.B. kann die der bestehenden Schalung zugeordnete Wahrscheinlichkeit als Multiplikationsfaktor für die neue Wahrscheinlichkeit berücksichtigt werden. Die resultierende Wahrscheinlichkeit der Position der angedockten Schalung kann bei der Bewertung der Vereinbarkeit berücksichtigt werden. Beispielsweise kann bei Unterschreitung eines Wahrscheinlichkeitsgrenzwertes eine Warnung ausgegeben werden oder eine Positionierung an der betreffenden Position verworfen (d. h. nicht gespeichert) werden.

Die reduzierte Wahrscheinlichkeit kann optional in Abhängigkeit von einer Abweichung des ermittelten Abstandes von dem der gespeicherten Andockposition entsprechenden Abstand ermittelt werden. Dadurch kann in dem Parameter der Wahrscheinlichkeit wiedergegeben werden, wie groß der Einfluss der getroffenen Annahmen (Andockposition) im Vergleich zur Messung (Abstand) war. Eine größere Abweichung der Abstände entspricht somit einer geringeren Wahrscheinlichkeit. Entsprechend einer weiteren Ausführungsvariante kann das Verfahren auf Basis einer gespeicherten Aufstellreihenfolge mehrerer Schalungen und der jeweils ermittelten Positionen und/oder Abstände durchgeführt werden, wobei im Falle mehrerer möglicher Andockpositionen für eine angedockte Schalung die Wahrscheinlichkeit der möglichen Andockpositionen auf Basis chronologisch nachfolgend aufgestellter weiterer Schalungen bewertet wird und jene der möglichen Andockpositionen als Position der angedockten Schalung ermittelt wird, der die größte Wahrscheinlichkeit zugeordnet ist. Auf diese Weise kann nach dem Aufstellen mehrerer Schalungen die gesammelte Positionsinformation sämtlicher Abstandsmessungen kombiniert und auf dieser Grundlage die Positionen sämtlicher Schalungen korrigiert werden.

Optional kann das Ermitteln der Andockposition umfassen:
Ermitteln einer Anschlussgeometrie für mindestens zwei Positionsmöglichkeiten;
Ermitteln der Andockposition im Rahmen der Positionsbestimmung einer nachfolgenden Schalung, wobei die Position der nachfolgenden Schalung an einer mit der Anschlussgeometrie vereinbaren Andockposition ermittelt wird.

In diesem Zusammenhang können beispielsweise bestimmte Formen oder Sonderformen im digitalen System vereinfacht dargestellt werden. Beispielsweise kann ein Eckenelement vereinfacht die Geometriedaten eines Vierecks aufweisen. Die Anschlussflächen sind hier maßgebend für die vereinfachte Geometrie, da die Anschlussflächen immer an den Kanten der vereinfachten Geometrie liegen sollten. Nachdem weitere Schalungen platziert worden sind, kann die Wahrscheinlichkeit der präzisen Lage und Ausrichtung der Schalung genauer bestimmt werden. Ein Bogenelement könnte beispielsweise als Viereck dargestellt werden. Die Position dieses vereinfacht dargestellten Vierecks könnte nun bestimmt werden. Es bestünde hier jedoch immer noch die Ungewissheit, ob das Schalungselement korrekt aufgestellt wurde. Es wäre beispielsweise möglich, dass das Bogenelement im vereinfacht dargestellten Geometriefeld (Viereck) gespiegelt oder verdreht aufgestellt wurde. Um dieser Unsicherheit vorzubeugen, könnte die genaue Ausrichtung über ein 3D-Magnetometer dargestellt werden. Es sind auch andere Formen für derartige vereinfachte Geometrien oder Anschlussgeometrien möglich. Als Beispiele sind Rhomboide, Parallelogramme, Deltoide, usw. zu nennen. Zudem kann eine Anschlussgeometrie auch dreidimensional sein. Beispiele hierfür sind Quader, wobei die Seitenflächen eines solchen Quaders einer Anschlussgeometrie deckungsgleich mit den Anschlussflächen einer angedockten (positionszubestimmenden) Schalung sein können. Grundsätzlich ist eine Anschlussgeometrie als Platzhalter (Block) für eine noch nicht zu 100% definierte Lage und Ausrichtung einer Schalung zu sehen. Ferner wäre es auch denkbar, über eine Schalungsgeometrie ein Toleranzfeld zu erzeugen. Dies könnte durch eine Schalungsgeometrie minimal, welche die minimalen Toleranzgeometrien aufweist, und eine Schalungsgeometrie maximal, welche die maximalen Toleranzgeometrien aufweist, dargestellt werden. Zwischen diesen beiden Toleranzgeometrien würde sich somit ein Toleranzfeld ausbilden. Das Toleranzfeld repräsentiert eine Unsicherheit der genauen Position der Grenzflächen (und somit auch der Anschlussflächen) im Raum an jedem Punkt der Schalung. Geometrisch entspricht das Toleranzfeld einer Schale mit einer definierten Stärke (Abstand zwischen minimaler Toleranzgeometrie und maximaler Toleranzgeometrie; muss nicht überall gleich sein), in der die tatsächliche Grenzfläche erwartet wird. Die Stärke ist dabei umgekehrt proportional zur Genauigkeit, mit der die Position und Geometrie der Grenzfläche bekannt ist.

Es können auch mehrere Sender, Tags und/oder Sensoren an einer Schalung angebracht sein. Besonders bevorzugt kann dies sein, um die Positioniergenauigkeit zu verbessern, da wenigstens zwei Rückmeldungen je zu ortende Schalung erfasst werden können. Ferner kann die Erfassung von wenigstens zwei Sendern auch Auskunft über die Lage der Schalung geben und als Abgleich für die erfasste Lageinformation durch die Lagesensoren dienen.

Bei viereckigen Schalungen werden die Sender, Tags und/oder Sensoren bevorzugt diagonal gegenüber in den eckennahen Bereichen der Schalung angebracht. Dies hat den Vorteil, dass sich unabhängig der Drehung der Schalung, ein Sender, Tag und/oder Sensor immer in einem oberen Bereich der Schalung befindet.

Zusätzlich ist zu erwähnen, dass die Anschlussflächen, Andockpositionen oder Andockflächen von Schalungen jegliche Umfangsflächen darstellen können. Beispielsweise bei jenen Schalungssystemen, die so ausgelegt sind, dass Schalungen stehend, aber auch gedreht betoniert werden können. Als Beispiel ist hier eine stehende Schalung zu nennen, die um 90 Grad gedreht wurde. Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Die Zeichnungen zeigen im Einzelnen:
Fig. 1 einen schematischen Grundriss eines Systems zur Positionsbestimmung mehrerer Schalungen auf einer Baustelle mit zwei Empfängern;
Fig. 2 eine ähnliche Ansicht wie Fig. 1 mit einer unterbrochenen Sichtverbindung;
Fig. 3 einen schematischen Grundriss eines vereinfachten Systems gemäß Fig. 1 zum Zeitpunkt des Aufstellen zu einer vierten Schalung mit mehreren möglichen Schalungspositionen;
Fig. 4a und 4b eine ähnliche Ansicht wie Fig. 3 bzw. eine Detailansicht davon, wobei eine Andockposition unter den möglichen Schalungspositionen hervorgehoben ist;
Fig. 5 schematisch ein Schalungselement mit einem Sender oder Tag;
Fig. 6 schematisch mehrere aneinandergereihte Schalungselemente mit jeweils einem Sender oder Tag, wobei ein Schalungselement um 90° gedreht wurde;
Fig. 7a schematisch zwei Schalungen mit einem Eckenelement, wobei das Eckenelement vier verschiedene mögliche Ausrichtpositionen zeigt;
Fig. 7b schematisch zwei Schalungen und eine digitale Anschlussgeometrie eines Eckenelements; und
Fig. 8 eine ähnliche Ansicht wie Fig. 7a bzw. 7b, wobei ein Bogenelement mit vier Ausrichtpositionen und einer digitalen Anschlussgeometrie gezeigt wird.

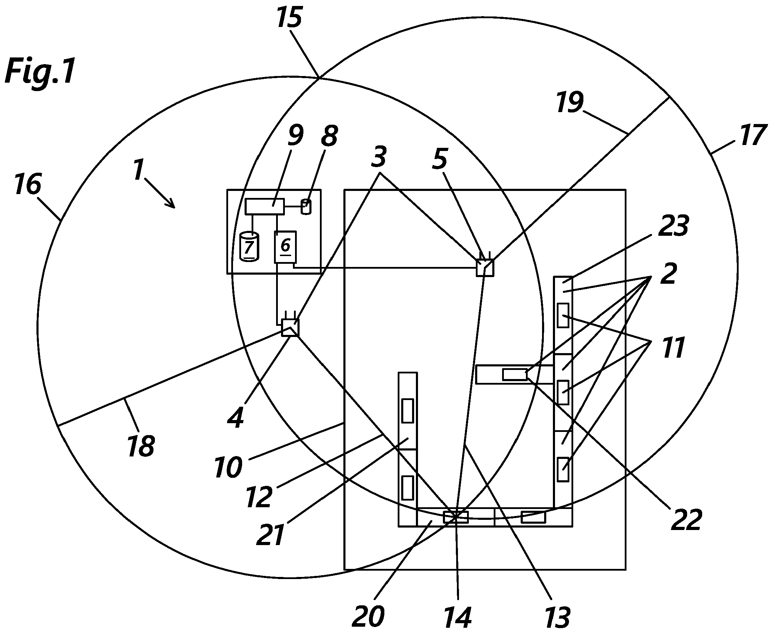

Fig. 1 zeigt ein System 1 zur Positionsbestimmung von Schalungen. Das System 1 umfasst mehrere Schalungen 2, zwei Bezugspunkte 3 mit jeweils einem Empfänger 4, 5, eine Abstandermittlungseinheit 6, eine Positionsdatenbank 7, eine Geometriedatenbank 8 und eine Abgleicheinheit 9.

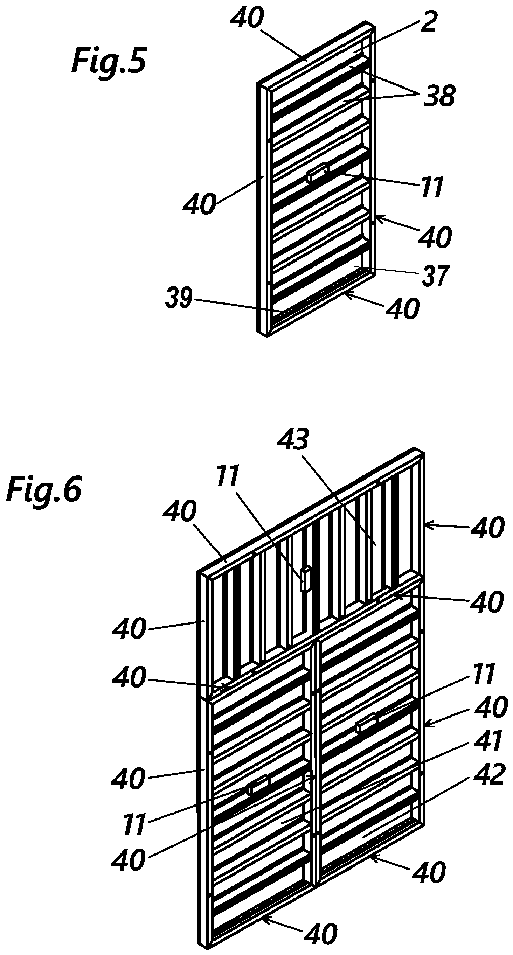

Das gezeigte System 1 kommt auf einer rechteckig angedeuteten Baustelle 10 zum Einsatz. Dabei werden mehrere (in diesem Beispiel insgesamt acht) Schalungen 2 mit teilweise unterschiedlichen Abmessungen verwendet. Die Schalungen 2 sind jeweils mit einem Sender 11 für ein Ortungssignal ausgestattet. Die Positionen der Sender 11 auf den Schalungen 2 sind hier nur grob schematisch dargestellt. Tatsächlich sind die Sender 11 jeweils zentriert in der Mitte der Rückseite der jeweiligen Schalung 2 angeordnet (vgl. Fig. 5). Die Schalungen 2 weisen außerdem einen Lagesensor auf. Die Lagesensoren sind jeweils mit den Sendern 11 der Schalungen 2 verbunden (z.B. als Einheit in einem Gehäuse integriert). Im Betrieb liest eine Steuerung des Senders 11 in regelmäßigen Abständen eine Lageinformation vom verbundenen Lagesensor aus und übermittelt die Lageinformation über den Sender 11 als Teil eines gesendeten Ortungssignals an den oder die Empfänger 4, 5.

Die von den Sendern 11 gesendeten Ortungssignale können von den beiden Empfängern 4, 5 an den Bezugspunkten 3 empfangen werden. Die Positionen der Bezugspunkte 3 sind dem System 1 bekannt und wurden beispielsweise bei der Errichtung mittels DGNSS oder vergleichbarer Verfahren initialisiert. Die Abstandermittlungseinheit 6 ist mit beiden Empfängern 4, 5 verbunden (z.B. über eine Netzwerkverbindung, wie etwa ein mobiles Datennetzwerk) und zur Ermittlung jeweils eines Abstands zwischen den Schalungen 2 und den damit über eine Sichtverbindung verbundenen Bezugspunkten 3 eingerichtet. Der Abstand wird dabei jeweils auf Basis eines vom Sender 11 gesendeten und vom Empfänger 4, 5 empfangenen Ortungssignals ermittelt. Zur eindeutigen Positionsbestimmung von Schalungen im zweidimensionalen Raum werden ohne weitere Randbedingungen mindestens die Abstände zu drei Bezugspunkten benötigt, um eine Triangulation durchzuführen.

In dem in Fig. 1 dargestellten Beispiel sind nur zwei Empfänger 4, 5 an dementsprechend zwei Bezugspunkten 3 vorgesehen. Unter der Annahme einer bekannten Höhe der Position der Schalungen 2 (in einer bekannten horizontalen Ebene) kann die Position einer Schalung 2 auf Basis von zwei gemessenen Abständen 12, 13 auf zwei Möglichkeiten eingeschränkt werden, wie durch die Schnittpunkte 14, 15 der Umkreise 16, 17 der beiden Bezugspunkte 3 dargestellt ist. Die Umkreise 16, 17 haben jeweils den Radius 18, 19 des von dem betreffenden Bezugspunkt 3 auf Basis des vom Empfänger 4, 5 empfangenen Ortungssignal ermittelten Abstands 12, 13. D. h. es existieren zwei mögliche Positionen in der Ebene, die von beiden Bezugspunkten 3 die jeweils ermittelten Abstände 12, 13 haben. Mit der zusätzlichen Randbedingung der örtlichen Begrenzung der Baustelle 10 kann ein Schnittpunkt 15 als mögliche Position ausgeschlossen werden, sodass die gesuchte Position der Schalung 20 mit diesen Annahmen und Randbedingungen eindeutig im Schnittpunkt 14 ermittelt werden kann.

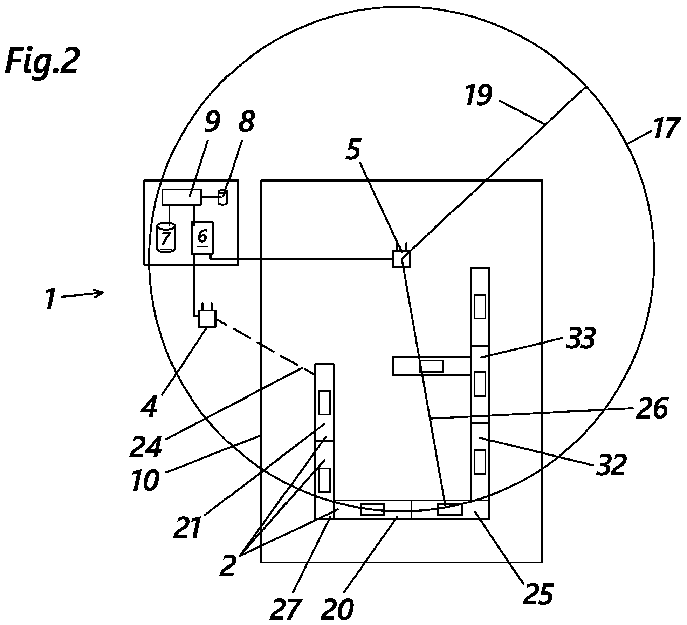

Allerdings haben im gezeigten Beispiel nur drei Schalungen 21, 22, 23 eine direkte Sichtverbindung zu beiden Empfängern 4, 5. Fig. 2 illustriert die unterbrochenen Sichtverbindung 24 zwischen dem ersten Empfänger 4 und der Schalung 25.

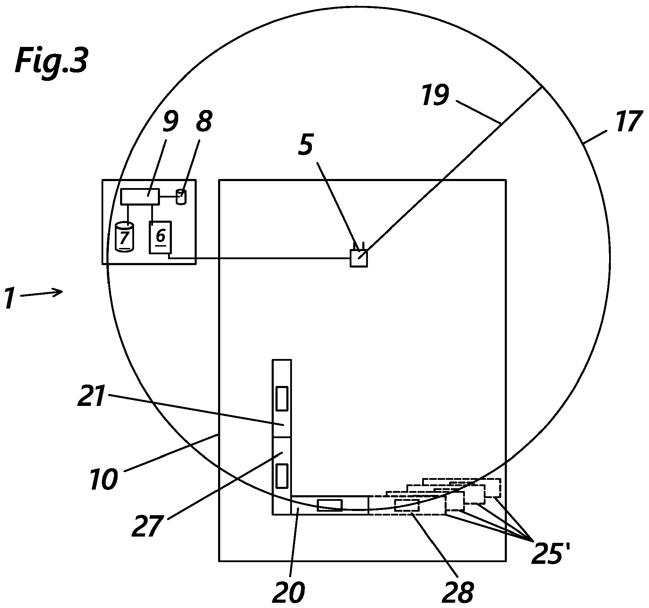

Beim Aufstellen der Schalungen 2 wird daher die Position dieser Schalung 25 nicht aus zwei ermittelten Abständen ermittelt werden können, wenn die Schalung 25 nach der Schalung 21 aufgestellt wird. Vielmehr ist nur der Abstand 26 zu dem Bezugspunkt 3 mit dem zweiten Empfänger 5 bekannt. Dementsprechend ist in Fig. 3 nur der Umkreis 17 dieses Bezugspunkts 3 eingezeichnet. Entlang dieses Umkreises 17 oder Signalkreises ergeben sich unendlich viele theoretische Positionsmöglichkeiten 25', selbst in der bekannten Ebene und innerhalb der Baustelle 10. Der Einfachheit halber geht dieses Beispiel davon aus, dass eine Lageinformation der neu aufgestellten Schalung 25 vorliegt, sodass die grundsätzliche Ausrichtung (im gezeigten Grundriss horizontal und parallel zur kürzeren Seite der Baustelle 10) bekannt ist.

Hier setzt die offenbarte Erfindung an, welche auf der Erkenntnis basiert, dass die Positionen der zeitlich vor der angedockten Schalung 25 bereits aufgestellten, bestehenden Schalungen 20, 21, 27 Rückschlüsse auf die wahrscheinliche Position der neu angedockten Schalung 25 zulassen. Damit diese Rückschlüsse gezogen werden können, speichert die Positionsdatenbank 7 während des Aufstellens der Schalungen 2 kontinuierlich die Positionen der aufgestellten Schalungen 2, sodass zu dem in Fig. 3 gezeigten Zeitpunkt die Positionen der bestehenden Schalungen 20, 21, 27 in der Positionsdatenbank 7 gespeichert sind. Darüber hinaus sind in der Geometriedatenbank 8 die Schalungsgeometrien der bestehenden Schalungen 20, 21, 27 hinterlegt (weil diese beim Aufstellen empfangen oder zugeordnet wurden) und es ist jede in der Positionsdatenbank 7 gespeicherte Position einer Schalung mit einer Geometrie der betreffenden Schalung verknüpft. Die Abgleicheinheit 9 ist zur Ermittlung einer mit einem von der Abstandermittlungseinheit 6 ermittelten Abstand (entsprechend der Radius 19 des Umkreises 17) vereinbaren Andockposition 28 der neu aufgestellten, angedockten Schalung 25 an einer der bereits früher aufgestellten, bestehenden Schalungen 20, 21, 27 und zum Speichern der ermittelten Andockposition 28 in der Positionsdatenbank 7 als Position der angedockten Schalung 25 eingerichtet. Dazu ist die Abgleicheinheit 9 zusätzlich mit der Geometriedatenbank 8 mit den gespeicherten Schalungsgeometrien der Schalungen und mit der Positionsdatenbank 7 verbunden.

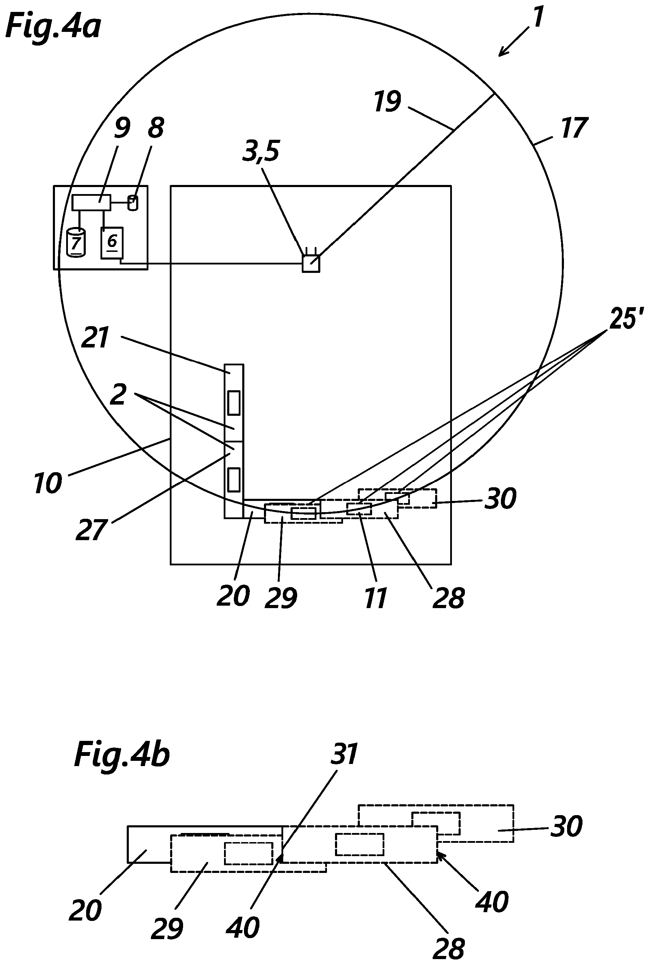

Die Randbedingung der mit dem ermittelten Abstand vereinbaren Andockposition 28 wird in den Figuren 4a und 4b genauer illustriert. Von den drei (aber eigentlich unendlich vielen) Positionsmöglichkeiten 25' der neu aufgestellten, angedockten Schalung 25 kommt eine Positionsmöglichkeit 29 schon aufgrund einer Kollision mit einer der bestehenden Schalung 20 nicht infrage und kann ausgeschlossen werden. Eine solche Kollision kann auf Basis der Positionen und Geometrien der bestehenden Schalungen 20, 21, 27 erkannt werden. Eine weitere Positionsmöglichkeit 30 würde einer Lücke und einem Versatz (quer zur Schalebene) zwischen der nächsten der bestehenden Schalungen 20 und der neu aufgestellten Schalung 25 entsprechen. Unter der Annahme von grundsätzlich aneinander anschließenden Schalungen, insbesondere wenn aufgrund der Schalungsgeometrie der neu aufgestellten Schalung ein Anschluss 31 (entsprechend einem Andocken) an einer oder beiden Seiten mit geeigneten Anschlussflächen 40 erforderlich ist, kann auch diese Positionsmöglichkeit 30 ausgeschlossen werden. Es kann daher letztlich genau eine Positionsmöglichkeit, welche die Andockposition 28 an die nächste der bestehenden Schalungen 20 ist, als wahrscheinlichste Position der neu aufgestellten Schalung 25 ermittelt und in der Positionsdatenbank 7 gespeichert werden. In der Andockposition 28 entsteht ein Anschluss 31 durch das Andocken zweier Anschlussflächen 40 benachbarter Schalungen 20, 25. Diese gespeicherte Position wird dabei z.B. einer reduzierten Wahrscheinlichkeit von 0,81 zugeordnet, um die Unsicherheit aufgrund nur einer verwendeten Abstandsmessung abzubilden und weil die Position der bestehenden Schalung 20, an die die angedockte Schalung 25 in der Andockposition 28 andockt, bereits selbst eine Andockposition ist und auf Basis nur eines Abstands ermittelt wurde (mangels Sichtverbindung zum Empfänger 4) und daher einer Wahrscheinlichkeit von 0,9 zugeordnet ist (0,81 = 0,9 mal 0,9).

Ohne die Lageinformation können auch Andockpositionen mit anderen Ausrichtungen der neu aufgestellten Schalung erwogen und verglichen werden, beispielsweise eine im gezeigten Grundriss vertikale Lage der neu aufgestellten Schalung (d.h. parallel zur längeren Seite der Baustelle 10). Diese würde allerdings einen deutlich geringeren Abstand zwischen dem Sender 11 und dem Bezugspunkt 3 voraussetzen, sodass sie auch ohne die Lageinformation aufgrund der Unvereinbarkeit mit dem ermittelten Abstand (entspricht dem Radius 19) ausgeschlossen werden könnte.

Eine örtliche Bereichsbegrenzung kann zum Verwerfen von Andockpositionen führen. Für die nach der Schalung 25 aufgestellte Schalung 32 (vgl. Fig. 2) könnte beispielsweise eine Andockposition unterhalb der Schalung 25 ausgeschlossen werden, weil die Schalung dann die Grenze der Baustelle 10 überragen würde. Die dieser Schalung 32 zugeordnete Wahrscheinlichkeit bei Verwendung der Andockposition an der Schalung 25 wird noch kleiner als 0,81 sein, z.B. 0,73 (= 0,81 mal 0,9 = 0,9 hoch 3), weil es sich um die dritte Andockposition in Folge handelt, die nur eine Abstandsmessung verwendet. Als Grenzwert für die Wahrscheinlichkeit könnte beispielsweise 0,7 angenommen werden, um sicherzustellen, dass zumindest jede vierte Schalung eine Sichtverbindung zu mindestens zwei Empfängern hat, damit die Position bestimmt werden kann.

Beim Aufstellen der Schalung 33 (vgl. Fig. 2) werden (vorübergehend) beide Empfänger 4, 5 ein Ortungssignal empfangen, weil diese Schalung 33 beim Aufstellen in der hier beschriebenen Reihenfolge eine direkte Sichtverbindung zu beiden Empfängern 4, 5 hat. Beide Sichtverbindungen werden durch die Schalung 22 unterbrochen, sobald diese aufgestellt wird. Beim Aufstellen der Schalung 33 wird die Position auf Basis der ermittelten Abstände zu den beiden Bezugspunkten 3 ermittelt und die Position der Schalung 33 wieder einer Wahrscheinlichkeit von eins zugeordnet werden. Nun kann nachträglich überprüft werden, ob die Schalung 32 an einer Andockposition der Schalung 33 positioniert wurde und gegebenenfalls die Position der Schalung 32 korrigiert und einer höheren Wahrscheinlichkeit (z.B. 0,9) zugeordnet werden. Die Position der vor der Schalung 32 aufgestellten Schalung 25 könnte nun nachträglich einer Wahrscheinlichkeit von 0,95 (Quadratwurzel aus 0,9 plus 0,9) zugeordnet werden, weil diese Position nun durch einen Abstand und zwei Andockpositionen bestätigt ist.

Fig. 5 zeigt die Rückseite einer Schalung 2 genauer, mit einem schematisch dargestellten Sender 11. In dieser Darstellung besteht die Schalung 2 aus einem Sperrholzkern 37 mit Kunststoffbelag, mehreren Rahmenprofilen 38 aus Aluminium und einer Sicke 39 für die Elementverbindung. Es sind jedoch auch andere Materialien für die Schalungsplatte oder Rahmenprofile 38, sowie andere Verbindungsoptionen möglich. Es werden zudem alle vier umlaufende Flächen als Anschlussflächen 40 beschrieben (zwei sichtbar, zwei verdeckt). Dies hat den Grund, dass an alle vier Anschlussflächen 40, je nach Ausrichtung der Schalung 2 eine weitere Schalung angedockt werden kann. In der dargestellten Ausführungsform sind die Anschlussflächen 40 in der Mitte abgestuft, sodass flüssiger Beton bei Undichtheit in den daraus resultierenden Hohlraum abfließen kann. Es sind jedoch auch andere Formen der Anschlussflächen 40, beispielsweise eben, möglich. Zentral ist an der Rückseite der Schalung ein Sender 11 angebracht. Dieser Sender 11 ist genau im Mittelpunkt der Schalfläche, d.h. im Schnittpunkt der Symmetrieachsen, angebracht, sodass als Berechnungsgrundlage Messdaten des Gyroskops und/oder Magnetometers mit den Geometriedaten der Schalung 2 kombiniert werden können und so die genaue Position der Anschlussflächen 40 bestimmt werden kann. Eine weitere nicht dargestellte Möglichkeit wäre es, den Sender 11 in einer Ecke der Rückseite der Schalung 2 zu platzieren. Über ein 3D-Magnetometer könnte somit die genaue Position der Schalung 2 bestimmt werden. Nachteilig kann hier sein, dass eine Schalung 2 bevorzugt so gedreht werden sollte, dass der Sender 11 möglichst weit oben steht und nicht am unteren Rand der Schalung 2, da hier die Wahrscheinlichkeit höher ist, dass der Empfang (LoS) unterbrochen ist.

Fig. 6 zeigt drei Schalungen 41, 42, 43 die miteinander verbunden sind. Die Verbindungselemente sind hier nicht dargestellt. Als Verbindungselemente können herkömmliche im Stand der Technik bekannte Lösungen wie beispielsweise Schnellspanner, Spanner, Spannklemmen, Klemmen, Spannschlösser, Elementverbinder Anwendung finden. Neben den zwei stehenden Schalungen 41, 42 ist auch eine darauf liegende Schalung 43 zu sehen. Diese Schalung 43 ist um 90° gegenüber einer aufrecht stehenden Schalung gedreht und mit der seitlichen Anschlussfläche 40 an die beiden stirnseitigen Anschlussflächen 40 der stehenden Schalungen 41, 42 angedockt. Dass die Schalung 43 um 90° gedreht ist, wurde bereits durch ein Gyroskop und/oder ein 3D-Magnetometer und/oder einen Beschleunigungssensor (Accelerometer) erkannt. Durch die Erkennung dieser Lage, werden im digitalen System die Andockpositionen 28 dieser um 90° gedrehten Schalung 43 aktualisiert und erkannt.

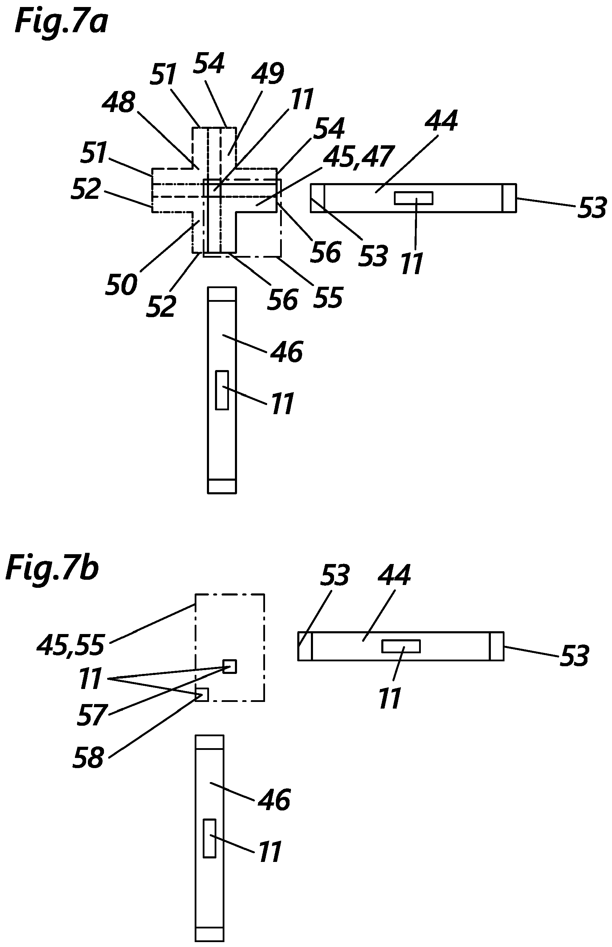

Fig. 7a zeigt eine bereits positionierte Schalung 44 und ein Eckenelement 45 in einer anzudockenden Position und eine nachfolgende, d.h. später an das Eckenelement anzudockende, Schalung 46. Die Schalungen 44, 46 und das Eckenelement 45 sind jeweils mit einem Sender 11 ausgestattet. Die Position des Eckenelements 45 kann allein mit dem Sender 11 und selbst mit einem Magnetometer nicht eindeutig bestimmt werden. Beispielsweise können an einer Nord-Süd-Geraden gespiegelte Positionsmöglichkeiten des Eckenelements 45 nicht voneinander unterschieden werden (Achsenspiegelung/Geradenspiegelung). Es ist durch die Information "Eckenelement" (d.h. die zugeordnete Geometrie dieses Spezialfalls einer Schalung) zwar bestimmt, dass die Positionsmöglichkeiten 47, 48, 49, 50 (genauer Positions- und Orientierungsmöglichkeiten) in einem Winkel von 90° zueinanderstehen, es ist jedoch nicht eindeutig feststellbar, welche der vier Positionsmöglichkeiten 47-50 die tatsächliche Position des Eckenelements 45 ist. Die Positionsmöglichkeiten 48 und 50 mit den Anschlussflächen 51 und 52 können aufgrund der bekannten Anschlussfläche 53 der bestehenden Schalung 44 ausgeschlossen werden. Um nun auch die Positionsmöglichkeit 49 mit der Anschlussfläche 54 ausschließen zu können, ist bei der Verwendung eines einfachen Magnetometers (Lagesensor) das Abwarten der Positionsbestimmung der nachfolgenden Schalung 46 sinnvoll. Dies kann digital durch eine vorrübergehende Anschlussgeometrie 55 dargestellt werden. Die Anschlussgeometrie 55 ist zwecks Übersichtlichkeit in Fig. 7a leicht erweitert dargestellt. Üblicherweise liegen die Begrenzungen genau an der Schalungsgeometrie, d.h. an den Anschlussflächen 54, 56 der verbleibenden Positionsmöglichkeiten 47, 49 (Fig. 7a zeigt zur einfacheren Nachvollziehbarkeit die Anschlussgeometrie 55 unter der Annahme, dass nur noch eine Positionsmöglichkeit 47 infrage kommt). Es können auch mehrere Anschlussgeometrien 55 einzeln oder zusammengefasst dargestellt werden, um die konkreten Positionsmöglichkeiten des Eckenelements 45 wenigstens temporär anzuzeigen. Sobald die nachfolgende Schalung 46 angedockt ist und weitere logische Rückschlüsse auf die Position des Eckenelements 45 gezogen werden können, wird die Anschlussgeometrie 55 durch die bekannte Geometrie des Eckenelements 45 ersetzt. Der Sender 11 befindet sich in der dargestellten Ausführung im Eckbereich des Eckenelements 45. Dies hat insbesondere platzliche und bauliche Gründe.

Die Fig. 7b zeigt grundsätzlich eine ähnliche Anordnung wie Fig. 7a. Das Eckenelement 45 wird hier als eine viereckige Anschlussgeometrie 55 dargestellt. Gezeigt werden außerdem Sender 11 an unterschiedlichen Anbringungspositionen 57, 58 (in der Praxis wird typischerweise nur ein Sender an einer Anbringungsposition verwendet). Über eine Andockung wenigstens einer nachfolgenden Schalung 46 kann die Ausrichtung des Eckenelements 45 nachträglich, wie in Fig. 7a gezeigt, konkretisiert werden. Wie an der Form der Anschlussgeometrie 55 zu sehen, wurden die Positionsmöglichkeiten 48 und 50 bereits aufgrund der Anschlussflächen 53 der bestehenden Schalung 44 ausgeschlossen (die Anschlussgeometrie 55 gemäß Fig. 7b umfasst somit die beiden Positionsmöglichkeiten 47 und 49). Die Anbringungsposition 58 des Senders 11 zeigt in diesem Beispiel eine Ideallage am Eckenelement 45 an, da die Positionsmöglichkeit 49 in diesem Fall über die Lage des Senders 11 auch ausgeschlossen werden könnte, sofern die Positionsbestimmung des Senders 11 präzise genug ist.

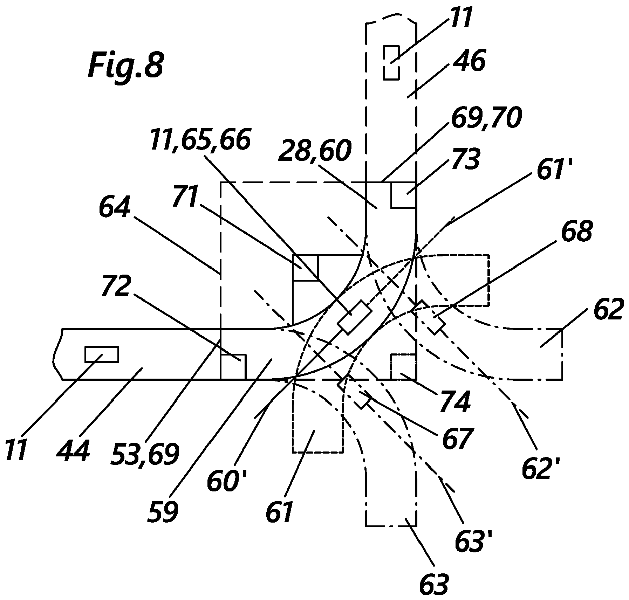

Fig. 8 zeigt eine an einer bestehenden Schalung 44 angedockte Schalung 59 in einer Andockposition 28, wobei die angedockte Schalung 59 ein Bogenelement mit vier Positionsmöglichkeiten 60-63, den jeweiligen Achslagen 60'-63' je Positionsmöglichkeit 60-63, eine digitale Anschlussgeometrie 64, eine nachfolgende Schalung 46 (strichliert eingezeichnet) und unterschiedliche Senderpositionen 65-68 je Positionsmöglichkeit 60-63 und je nach baulichen und/oder positionstechnischen Gründen. Ein derartiger positionstechnischer Grund kann sein, dass die Anbringung des Senders 11 in einem eckennahen Bereich bereits direkt an zwei Punkten der Anschlussflächen 69 der Schalung 59 anliegt, und somit eine andere, meist vorteilhafte Referenz bildet, als ein Sender 11, der beispielsweise außermittig, also nicht im Schnittpunkt der Diagonalen der Schalungsfläche, angebracht ist. Die Positionsmöglichkeiten 62, 63 können hier über die Achslagen 62', 63' (Magnetometer, Kompass) ausgeschlossen werden. Die Positionsmöglichkeit 61 hat jedoch eine im Wesentlichen deckungsgleiche Achslage 61' wie die Achslage 60' der der Andockposition 28 entsprechenden Positionsmöglichkeit 60. Abhängig von der Geometrie der angedockten Schalung 59 kann die Position 61 über die Achslage 61' möglicherweise nicht mit Sicherheit ausgeschlossen werden. Über die Erfassung der nachfolgenden Schalung 46 und der dazugehörigen Anschlussfläche 70 kann zumindest nachträglich die Position 61 ausgeschlossen werden oder eine auf Basis der angenommenen Geometrie der angedockten Schaltung ermittelte wahrscheinliche Position (was z.B. bei dem hier darstellten Bogenelement der Fall wäre) überprüft werden. Eine weitere Möglichkeit wäre es, die Position des Senders 11 so zu legen, dass eine Spiegelung oder Drehung der Schalung 59 (Bogenelement) nicht dazu führt, dass die Achslagen 60', 61' deckungsgleich liegen. Beispiele für derartige Senderpositionen 71-74 des Senders 11 sind in der Fig. 8 dargestellt. Bei diesen Beispielen ist der Sender 11 in den eckennahen Bereichen einer Anschlussgeometrie 64 oder im gedachten Mittelpunkt der Anschlussgeometrie 64 angeordnet.

## Patentansprüche

1. Verfahren zur Positionsbestimmung einer an mindestens einer bestehenden Schalung angedockten Schalung (25), umfassend:
Aussenden eines Ortungssignals von der angedockten Schalung (25) ;
Empfangen des ausgesendeten Ortungssignals mit einem Empfänger (5) an mindestens einem Bezugspunkt (3);
Ermitteln eines Abstands (26) zwischen der angedockten Schalung (25) und dem mindestens einen Bezugspunkt (3) auf Basis des empfangenen Ortungssignals;
Ermitteln einer mit dem ermittelten Abstand (26) vereinbaren Andockposition (28) der angedockten Schalung (25) an der mindestens einen bestehenden Schalung (20); und
Speichern der ermittelten Andockposition (28) als Position der angedockten Schalung (25).

2. Verfahren nach Anspruch 1, **dadurch gekennzeichnet, dass** das Ermitteln der Andockposition (28) umfasst:
Ermitteln aller möglichen Andockpositionen (28) der angedockten Schalung (25) an der mindestens einen bestehenden Schalung (20);
Ermitteln des jeweils zugeordneten Abstandes der ermittelten möglichen Andockpositionen (28) zu dem mindestens einen Bezugspunkt (3);
Ermitteln jener Andockpositionen (28) als vereinbar mit dem ermittelten Abstand (26), deren zugeordneter Abstand innerhalb eines Toleranzbereichs um den ermittelten Abstand (26) liegt.

3. Verfahren nach Anspruch 2, **dadurch gekennzeichnet, dass** das Ermitteln der Andockposition (28) umfasst:
Beschränken der möglichen Andockpositionen (28) auf Grundlage einer örtlichen Bereichsbegrenzung.

4. Verfahren nach Anspruch 2 oder 3, **dadurch gekennzeichnet, dass** das Ermitteln der Andockposition (28) umfasst:
Beschränken der möglichen Andockpositionen (28) auf Grundlage einer Lageinformation betreffend die angedockte Schalung (25).

5. Verfahren nach einem der Ansprüche 1 bis 4, **dadurch gekennzeichnet, dass** ein Ortungssignal zusammen mit einer Geometrie der angedockten Schalung (25) und/oder mit einer Lageinformation von der angedockten Schalung (25) an einen Empfänger (4; 5) übermittelt wird.

6. Verfahren zur Positionsbestimmung einer angedockten Schalung (25), umfassend:
Ermitteln der Anzahl von Bezugspunkten (3) mit einer direkten Sichtverbindung zu der angedockten Schalung (25);
wenn die ermittelte Anzahl von Bezugspunkten (3) kleiner als drei oder kleiner als zwei ist, Durchführen des Verfahrens nach einem der Ansprüche 1 bis 5.

7. Verfahren nach Anspruch 6, **dadurch gekennzeichnet, dass** wenn die ermittelte Anzahl von Bezugspunkten (3) mindestens drei ist, die Position der angedockten Schalung (25) auf Basis der Abstände zu den mindestens drei Bezugspunkten (3) ermittelt und einer Wahrscheinlichkeit von eins zugeordnet wird.

8. Verfahren nach Anspruch 6 oder 7, **dadurch gekennzeichnet, dass** die nach dem Verfahren gemäß einem der Ansprüche 1 bis 5 ermittelte Position der angedockten Schalung (25) einer reduzierten Wahrscheinlichkeit kleiner als eins zugeordnet wird, wobei die der mindestens einen bestehenden Schalung (20), an die die angedockte Schalung (25) angedockt ist, zugeordnete Wahrscheinlichkeit berücksichtigt wird.

9. Verfahren nach Anspruch 8, **dadurch gekennzeichnet, dass** die reduzierte Wahrscheinlichkeit in Abhängigkeit von einer Abweichung des ermittelten Abstandes (26) von dem der gespeicherten Andockposition (28) entsprechenden Abstand ermittelt wird.

10. Verfahren nach einem der Ansprüche 1 bis 9, **dadurch gekennzeichnet, dass** das Ermitteln der Andockposition (28) umfasst:
Ermitteln einer Anschlussgeometrie (55) für mindestens zwei Positionsmöglichkeiten (47-50);
Ermitteln der Andockposition (28) im Rahmen der Positionsbestimmung einer nachfolgenden Schalung (46), wobei die Position der nachfolgenden Schalung (46) an einer mit der Anschlussgeometrie (55) vereinbaren Andockposition ermittelt wird.

11. Verfahren nach einem der Ansprüche 1 bis 10, **dadurch gekennzeichnet, dass** das Verfahren auf Basis einer gespeicherten Aufstellreihenfolge mehrerer Schalungen (2) und der jeweils ermittelten Positionen und/oder Abstände durchgeführt wird, wobei im Falle mehrerer möglicher Andockpositionen für eine angedockte Schalung die Wahrscheinlichkeit der möglichen Andockpositionen (28) auf Basis von chronologisch nachfolgend aufgestellten weiteren Schalungen bewertet wird und jene der möglichen Andockpositionen (28) als Position der angedockten Schalung ermittelt wird, der die größte Wahrscheinlichkeit zugeordnet ist.

12. System (1) zur Positionsbestimmung von Schalungen (2), umfassend:
eine angedockte Schalung (25) mit einem Sender (11) für ein Ortungssignal,
mindestens einen Bezugspunkt (3) mit einem Empfänger (5) für ein Ortungssignal,
eine Abstandermittlungseinheit (6), die zur Ermittlung eines Abstands (26) zwischen der angedockten Schalung (25) und dem mindestens einen Bezugspunkt (3) auf Basis eines vom Sender (11) gesendeten und vom Empfänger (5) empfangenen Ortungssignals eingerichtet ist;
eine Positionsdatenbank (7) mit gespeicherten Positionen mindestens einer bestehenden Schalung (20); und
eine Abgleicheinheit (9), die zur Ermittlung einer mit einem von der Abstandermittlungseinheit (6) ermittelten Abstand (26) vereinbaren Andockposition (28) der angedockten Schalung (25) an einer bestehenden Schalung (20) und zum Speichern der ermittelten Andockpositionen (28) in der Positionsdatenbank (7) als Position der angedockten Schalung (25) eingerichtet ist.

13. System (1) nach Anspruch 12, **dadurch gekennzeichnet, dass** die Abgleicheinheit (9) mit einer Geometriedatenbank (8) mit gespeicherten Schalungsgeometrien der angedockten und der mindestens einen bestehenden Schalung verbunden ist.

14. System (1) nach einem der Ansprüche 12 oder 13, **dadurch gekennzeichnet, dass** der Sender (11) zentriert auf der angedockten Schalung (25) angeordnet ist.

15. System (1) nach einem der Ansprüche 12 bis 14, **dadurch gekennzeichnet, dass** die angedockte Schalung (25) einen Lagesensor aufweist, wobei der Lagesensor mit dem Sender (11) verbunden ist.
